# EUROPEAN PATENT APPLICATION

(11) **EP 4 674 596 A1**
(43) Date of publication of application: **07.01.2026**
(21) Application number: 24849526.9
(22) Date of filing: 26.07.2024
(51) Int. Cl.: B29C 51/08, B29C 51/30, B29C 43/36, H01M 50/105, B29L 31/00

(54) **MOLDING DEVICE**

(30) Priority: 28.07.2023 KR 20230099104
(71) Applicant: LG Energy Solution, Ltd., Seoul 07335 (KR)
(72) Inventor: KIM, Young Soon, Daejeon 34122 (KR); LEE, Jin Uk, Daejeon 34122 (KR); NOH, Hyung Jun, Daejeon 34122 (KR)
(74) Representative: Plasseraud IP
(86) International application number: PCT/KR2024/010975
(87) International publication number: WO 2025/028957

(57) **Abstract**

A forming apparatus according to an embodiment of the present disclosure may form a pouch sheet. The forming apparatus may include a die having a pair of forming spaces recessed downwards from an upper surface and a partition wall portion between the pair of forming spaces; and a punch that is configured to inserted into the forming spaces and press the pouch sheet. At least one of the punch or the partition wall portion may include a contact portion that is extended in a direction and comes into contact with the pouch sheet, and an elastic member configured to apply an elastic force to the contact portion in a direction toward the pouch sheet.

## Description

### TECHNICAL FIELD

### CROSS-REFERENCE TO RELATED APPLICATIONS

The present application claims priority to Korean Patent Application No. 10-2023-0099104 filed on July 28, 2023 in the Republic of Korea, the disclosure of which is incorporated herein by reference.

### TECHNICAL FIELD

The present disclosure relates to a forming apparatus for forming a pouch sheet.

### BACKGROUND ART

In general, the types of secondary batteries include nickel cadmium batteries, nickel hydrogen batteries, lithium-ion batteries and lithium-ion polymer batteries and so on. Secondary batteries are used in not only small products including digital cameras, P-DVD, MP3P, mobile phones, personal digital assistants (PDAs), Portable Game Devices, Power Tools and E-bikes, but also large products requiring high output such as electric vehicles or hybrid electric vehicles and energy storage systems and backup energy storage systems to store surplus electricity or new renewable energy.

To manufacture a secondary battery, first, an electrode active material slurry is applied to a positive electrode current collector and a negative electrode current collector to make a positive electrode and a negative electrode, and the positive electrode and the negative electrode are stacked on two sides of a separator to form an electrode assembly of a predetermined shape. Additionally, the electrode assembly is received in a battery case, followed by electrolyte injection and sealing.

Secondary batteries are classified into pouch-type and can-type according to the material of the case accommodating the electrode assembly. The pouch-type uses a pouch made of a flexible polymer to accommodate the electrode assembly. Additionally, the can-type uses a metal or plastic case to accommodate the electrode assembly.

The pouch-type battery case is generally manufactured by carrying out press processing on a flexible pouch sheet to form a cup portion. Additionally, when the cup portion is formed, the electrode assembly is received in the cup portion, followed by side sealing to manufacture a secondary battery.

In the press processing, drawing is performed by inserting a pouch film into a forming apparatus such as a press machine and applying the pressure to the pouch film with a punch to stretch the pouch film.

To realize secondary batteries having high energy density, when forming a bridge between a pair of cup portions in the pouch-type battery case, it is preferable to form the bridge with a small width. However, as the width of the bridge is smaller, the remaining thickness of the bridge is smaller, so cracking is more likely to occur, causing problems with performance and safety of secondary batteries.

### SUMMARY

### TECHNICAL PROBLEM

The present disclosure is directed to providing a forming apparatus capable of increasing the remaining thickness of a bridge of a pouch-type battery case.

### TECHNICAL SOLUTION

A forming apparatus according to an embodiment of the present disclosure may form a pouch sheet. The forming apparatus may include a die having a pair of forming spaces recessed downwards from an upper surface and a partition wall portion between the pair of forming spaces; and a punch that is configured to inserted into the forming spaces and press the pouch sheet. At least one of the punch or the partition wall portion may include a contact portion that is extended in a direction and comes into contact with the pouch sheet; and an elastic member configured to apply an elastic force to the contact portion in a direction toward the pouch sheet.

The contact portion may be extended in parallel to the partition wall portion.

At least one of the punch or the partition wall portion may have a mounting groove in which the elastic member is mounted.

The elastic member may include a plurality of elastic members arranged at a predetermined interval in a length direction of the contact portion.

A forming apparatus according to an embodiment of the present disclosure may form a pouch sheet. The forming apparatus may include a die having a pair of forming spaces recessed downwards from an upper surface and a partition wall portion between the pair of forming spaces; and a punch that is configured to inserted into the forming spaces and press the pouch sheet. The partition wall portion may include a contact portion that is extended in a direction and comes into contact with the pouch sheet; and an elastic member configured to apply an elastic force to the contact portion in a direction toward the pouch sheet.

Two upper edges of the contact portion may be rounded.

The contact portion may be located above the partition wall portion.

Any one of the partition wall portion or the contact portion may have a guide protrusion that is vertically extended, and the other one may have a guide hole into which the guide protrusion is inserted.

When the contact portion is in a basic state, an upper end of the contact portion may be located higher than the upper surface of the die, and when the contact portion is pressed downwards by the pouch sheet, the upper end of the contact portion may be located lower than the upper surface of the die or on a same plane with the upper surface of the die.

A forming apparatus according to an embodiment of the present disclosure may form a pouch sheet. The forming apparatus may include a die having a forming space recessed downwards from an upper surface; and a punch that is configured to inserted into the forming space and press the pouch sheet. The punch may include a contact portion defining a lower edge of the punch and extended in a direction; and an elastic member configured to apply an elastic force downwards onto the contact portion.

When the contact portion is in a basic state, a lower end of the contact portion may be located lower than a lower surface of the punch, and when the contact portion is pressed upwards by the pouch sheet, the lower end of the contact portion may be located on a same plane with the lower surface of the punch.

A lower edge connecting a lower surface and an outer surface of the contact portion may be rounded.

Any one of the punch or the contact portion may have a guide protrusion that is vertically extended, and the other one may have a guide hole into which the guide protrusion is inserted.

### ADVANTAGEOUS EFFECTS

According to an exemplary embodiment of the present disclosure, it may be possible to form the bridge of the pouch-type battery case with a sufficiently small width and prevent the remaining thickness from becoming too small. Accordingly, it may be possible to increase the energy density of the pouch-type secondary battery and prevent cracks in the bridge.

Besides, the effects of the present disclosure may include effects that can be easily predicted by those skilled in the art from the configurations according to exemplary embodiments of the present disclosure.

### BRIEF DESCRIPTION OF THE DRAWINGS

The accompanying drawings illustrate the exemplary embodiments of the present disclosure and together with the following detailed description, serve to provide a better understanding of the technical aspect of the present disclosure, and thus the present disclosure should not be construed as being limited to the drawings.
FIG. 1 is an exploded view of a pouch-type secondary battery.
FIG. 2 is a perspective view of a forming apparatus for forming the pouch-type secondary battery shown in FIG. 1.
FIG. 3 is a schematic cross-sectional view of a forming apparatus according to an embodiment of the present disclosure.
FIG. 4 is a perspective view of a die shown in FIG. 3.
FIG. 5 is a cross-sectional view of FIG. 4, taken along the line A-A'.
FIG. 6 is a schematic cross-sectional view of a forming apparatus according to another embodiment of the present disclosure.
FIG. 7 is a bottom view of a punch shown in FIG. 6.
FIG. 8 is a cross-sectional view of FIG. 6, taken along the line B-B'.

### DETAILED DESCRIPTION

Hereinafter, the exemplary embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the specification.

Additionally, the terms or words used in the specification and the appended claims should not be construed as limited to general and dictionary meanings, but rather interpreted based on the meanings and concepts corresponding to the technical aspect of the present disclosure on the basis of the principle that the inventor is allowed to define the terms appropriately for the best explanation.

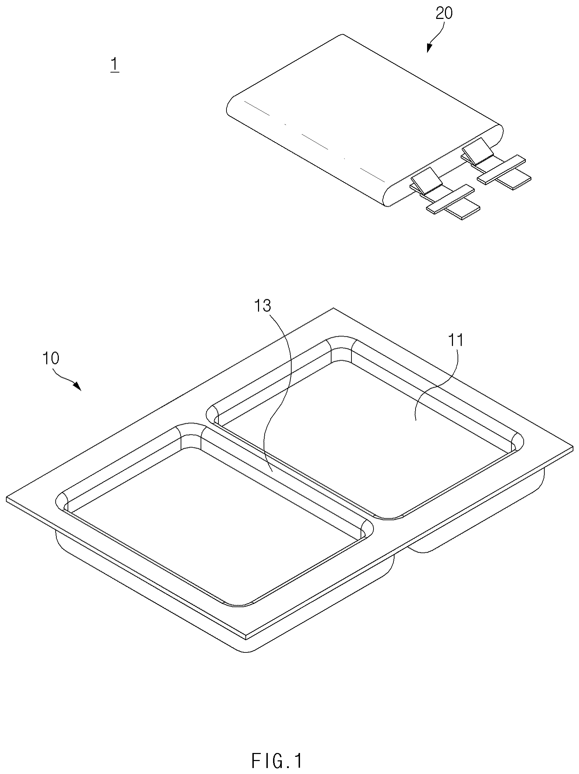

FIG. 1 is an exploded view of a pouch-type secondary battery.

The pouch-type secondary battery 1 may include a pouch-type battery case 10 (hereinafter, 'battery case') and an electrode assembly 20.

The battery case 10 may be manufactured by forming a pouch sheet. The pouch sheet may be a laminate sheet including a first resin layer, a metal layer and a second resin layer. The first resin layer may form the innermost layer of the battery case 10. The second resin layer may form the outermost layer of the battery case 10. The metal layer may be located between the first resin layer and the second resin layer, and have stiffness and formability.

For example, the first resin layer may include polypropylene (PP). The second resin layer may include polyethylene terephthalate (PET). The metal layer may include aluminum or stainless steel. However, the material of each layer is not limited thereto.

The battery case 10 may include a pair of cup portions 11, and a bridge 13 located between the pair of cup portions 11.

The pair of cup portions 11 may be recessed to a predetermined depth. The electrode assembly 20 may be received in the pair of cup portions 11. More specifically, in a state that the electrode assembly 20 is placed in one cup portion 11, the bridge 13 of the battery case 10 may be folded so that the other cup portion 11 may completely cover the electrode assembly 20. Subsequently, sealing may be done around the cup portions 11 to seal the electrode assembly 20 in the cup portions 11.

The electrode assembly 20 may be a structure in which a plurality of positive electrodes and a plurality of negative electrodes are stacked in an alternating manner with a separator interposed between. The type of the electrode assembly 20 is not limited thereto.

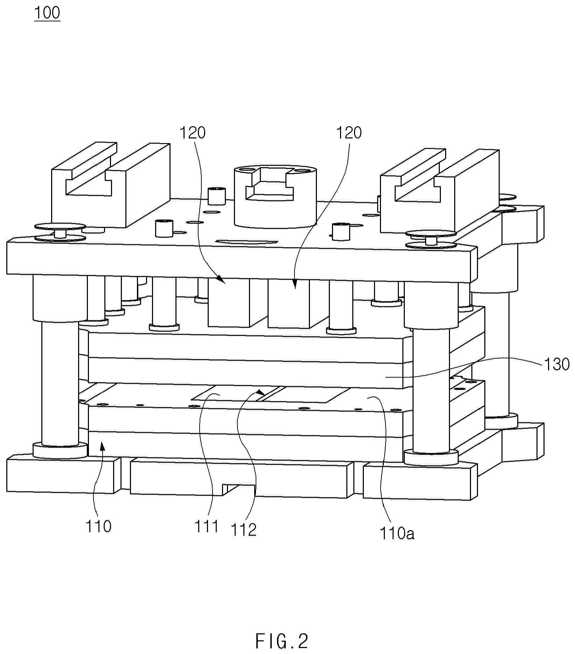

FIG. 2 is a perspective view of a forming apparatus for forming the pouch-type secondary battery shown in FIG. 1.

Hereinafter, the pouch sheet is indicated by the same reference number '10' as the pouch-type battery case.

The forming apparatus 100 may form the pouch sheet 10. The forming apparatus 100 may include a die 110 and a punch 120. The forming apparatus 100 may further include a stripper 30.

The forming apparatus 100 may form the pouch sheet 10 located between the die 110 and the punch 120.

The die 110 may be located below the pouch sheet 10. The die 110 may have a pair of forming spaces 111 recessed downwards from an upper surface 110a, and a partition wall portion 112 between the pair of forming spaces 111.

The punch 120 may be located above the pouch sheet 10. The punch 120 may be inserted into the forming space 111 of the die 110 and may press the pouch sheet 10. The punch 120 may include a pair of punches corresponding to the pair of forming spaces 111. The pair of punches 120 may be integrally connected to each other, but is not limited thereto.

The stripper 130 may be located above the pouch sheet 10. The pouch film 10 may be tightly held between the die 110 and the stripper 130. The stripper 130 may have a penetrating portion at which the punch 120 is disposed.

In a state that the pouch film 10 is tightly held between the die 110 and the stripper 130, the die 110 and the stripper 130 may move up together or the punch 120 may move down so that the punch 120 may be inserted into the insertion space 111. Accordingly, the punch 120 may press down the pouch film 10 tightly held between the die 110 and the stripper 130. In this instance, the partition wall portion 112 of the die 110 may press up the pouch film 10.

The part of the pouch film 10 pressed by the punch 120 may be formed into the cup portion 11, and the part of the pouch film 10 pressed by the partition wall portion 112 may be formed into the bridge 13.

To increase the energy density of the pouch-type secondary battery 1, it is advantageous to reduce the width of the bridge 13. However, as the width of the bridge 13 is narrower, the feeding amount of the pouch sheet 10 for the bridge 13 reduces and the remaining thickness of the bridge 13 reduces, causing cracks. To prevent this problem, it is necessary to increase the feeding amount the pouch sheet 10 for the bridge 13.

To this end, the forming apparatus 100 according to the present disclosure may include a contact portion 113, 121 and an elastic member 114, 122 in at least one of the punch 120 or the partition wall portion 112, wherein the contact portion 113, 121 is extended in one direction and comes into contact with the pouch sheet 10, and the elastic member 114, 122 applies an elastic force to the contact portion 113, 121 in a direction toward the pouch sheet 10.

When the contact portion 113, 121 and the elastic member 114, 122 are disposed in each of the punch 120 and the partition wall portion 112, the contact portion 113 and the elastic member 114 disposed in the partition wall portion 112 may be referred to as a first contact portion and a first elastic member, respectively, and the contact portion 121 and the elastic member 122 disposed in the punch 120 may be referred to as a second contact portion and a second elastic member, respectively.

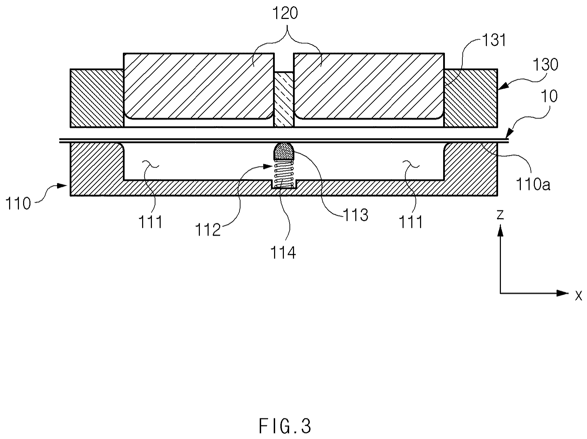

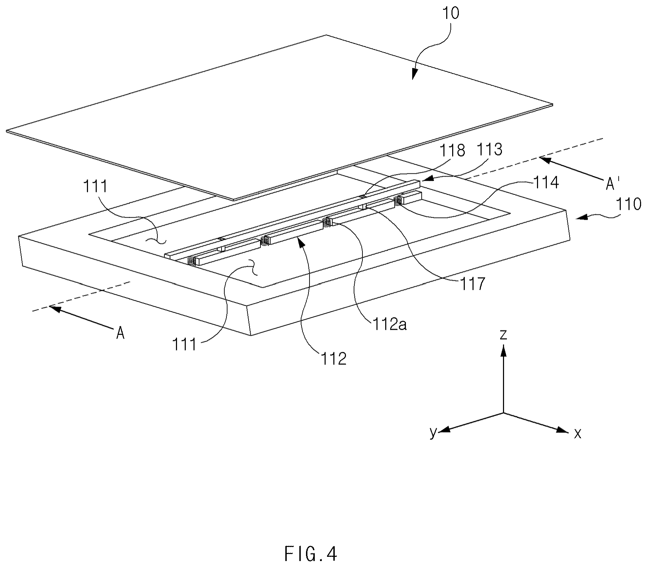

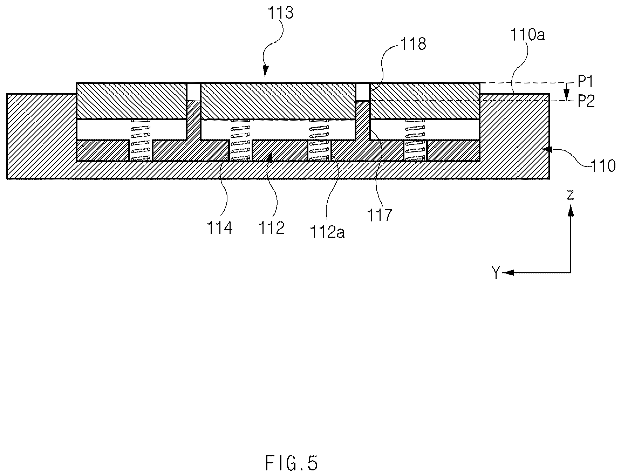

FIG. 3 is a schematic cross-sectional view of the forming apparatus according to an embodiment of the present disclosure, FIG. 4 is a perspective view of the die shown in FIG. 3, and FIG. 5 is a cross-sectional view of FIG. 4, taken along the line A-A'.

The forming apparatus 100 according to an embodiment of the present disclosure may include, as shown in FIG. 3, the contact portion 113 and the elastic member 114 in the partition wall portion 112 of the die 110.

The contact portion 113 may contact the lower surface of the pouch sheet 10. The contact portion 113 may be pressed downwards by the pouch sheet 10. The contact portion 113 may move in the vertical direction by an external force.

Two upper edges of the contact portion 113 may be rounded. Accordingly, it may be possible to prevent cracks from occurring in the pouch sheet 10 by the two upper edges of the contact portion 113.

The contact portion 113 may be extended in parallel to the partition wall portion 112. The contact portion 113 may be a bar shape. The contact portion 113 may be located above the partition wall portion 112. The partition wall portion 112 may limit the height to which the contact portion 113 moves down. That is, the partition wall portion 112 may act as a limiter.

Any one of the partition wall portion 112 or the contact portion 113 may have a guide protrusion 117 that is vertically extended, and the other one may have a guide hole 118 into which the guide protrusion 117 is inserted. Accordingly, the contact portion 113 may move in the vertical direction with respect to the partition wall portion 112.

As an example, as shown in FIG. 5, the guide protrusion 117 may protrude upwards from the partition wall portion 112, and the guide hole 118 may be recessed or penetrated in the contact portion 113. As another example, the guide protrusion 117 may protrude downwards from the contact portion 113, and the guide hole 118 may be recessed or penetrated in the partition wall portion 112.

The elastic member 114 may apply an elastic force upwards onto the contact portion 113. For example, the elastic member 114 may be a coil spring. The elastic member 114 may include a plurality of elastic members arranged at a predetermined interval in the length direction of the contact portion 113. The plurality of elastic members 114 may uniformly apply the elastic force upwards onto the contact portion 113.

The partition wall portion 112 may have a mounting groove 112a in which the elastic member 114 is mounted. The lower end of the elastic member 114 may be secured into the mounting groove 112a. The mounting groove 112a may include a plurality of mounting grooves arranged at the predetermined interval in the length direction of the partition wall portion 112 to mount the plurality of elastic members 114.

When the punch 120 presses down the pouch sheet 10, the force that the pouch sheet 10 applies downwards onto the contact portion 113 and the force that the elastic member 114 applies upwards onto the contact portion 113 may be properly balanced. Accordingly, the part of the pouch sheet 10 corresponding to the contact portion 113 may be formed into the bridge 13 (see FIG. 1), and the feeding amount of the pouch sheet 10 for the bridge 13 may be sufficient. Accordingly, it may be possible to form the bridge 13 with a sufficiently small width and prevent the remaining thickness from becoming too small.

As shown in FIG. 5, when the contact portion 113 is in a basic state, the upper end of the contact portion 113 may be located (P1) higher than the upper surface 110a of the die 110. The basic state may refer to a state before the punch 120 presses the pouch sheet 10. When the contact portion 113 is pressed downwards by the pouch sheet 10, the upper end of the contact portion 113 may be located lower than the upper surface 110a of the die 110 or may be located (P2) on the same plane with the upper surface 110a of the die 110.

Accordingly, it may be possible to prevent the formation of the bridge 113 with too great height. Additionally, as the amount of deformation of the elastic member 114 increases, the elastic force that the elastic member 114 applies to the contact portion 113 may sufficiently increase. Accordingly, it may be possible to prevent the remaining thickness of the bridge 13 from becoming too small.

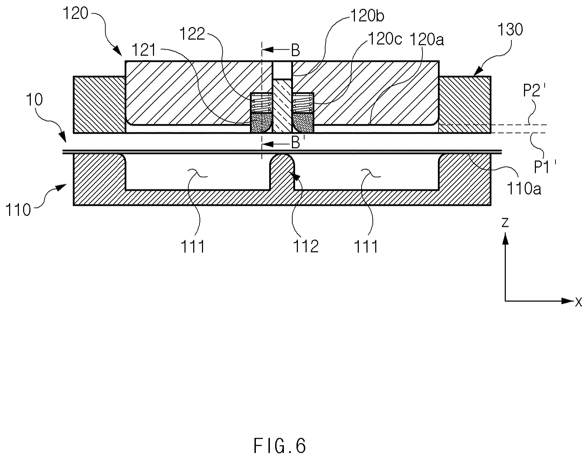

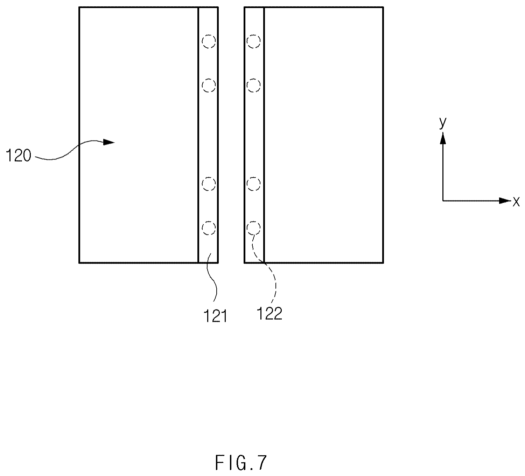

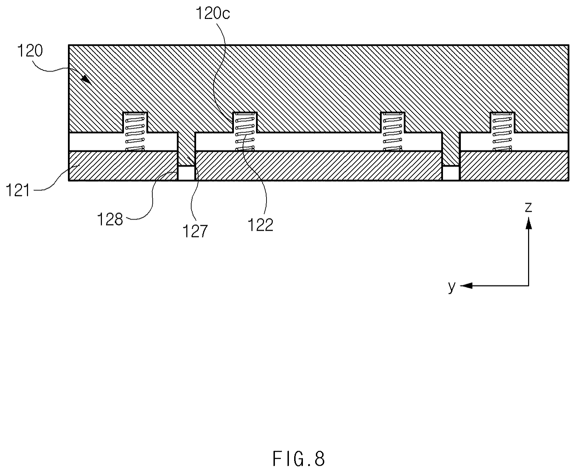

FIG. 6 is a schematic cross-sectional view of the forming apparatus according to another embodiment of the present disclosure, FIG. 7 is a bottom view of the punch shown in FIG. 6, and FIG. 8 is a cross-sectional view of FIG. 6, taken along the line B-B'.

The forming apparatus 100 according to another embodiment of the present disclosure may include the contact portion 121 and the elastic member 122 in the punch 120 as shown in FIG. 6.

The contact portion 121 may be disposed in each of the pair of punches 120. The contact portion 121 may define one lower edge of the punch 120. More specifically, the contact portion 121 may define one lower edge adjacent to the partition wall portion 112 of the die 110 among the lower edges of the punch 120. The contact portion 121 may define the lower edge of the facing part of the pair of punches 120. The contact portion 121 may be disposed at a location at which the lower surface 120a and an outer surface 120b of the punch 120 meet.

The contact portion 121 may contact an upper surface of the pouch sheet 10. The contact portion 121 may be pressed upwards by the pouch sheet 10. The contact portion 121 may move in the vertical direction by an external force.

A lower edge connecting a lower surface and an outer surface of the contact portion 121 may be rounded. The outer surface may refer to the facing surfaces of the pair of contact portions 121. Accordingly, it may be possible to prevent cracks from occurring in the pouch sheet 10 by the lower edge of the contact portion 121.

The contact portion 121 may be extended in parallel to the partition wall portion 112 of the die 110. The contact portion 121 may be a bar shape. The contact portion 121 may be located below the punch 120. The punch 120 may limit the height to which the contact portion 121 moves up. That is, the punch 120 may act as a limiter.

Any one of the punch 120 or the contact portion 121 may have a guide protrusion 127 that is vertically extended, and the other one may have a guide hole 128 into which the guide protrusion 127 is inserted. Accordingly, the contact portion 121 may move in the vertical direction with respect to the punch 120.

As an example, as shown in FIG. 8, the guide protrusion 127 may protrude downwards from the punch 120, and the guide hole 128 may be recessed or penetrated in the contact portion 121. As another example, the guide protrusion 127 may protrude upwards from the contact portion 121, and the guide hole 128 may be recessed or penetrated in the punch 120.

The elastic member 122 may apply an elastic force downwards onto the contact portion 121. For example, the elastic member 122 may be a coil spring. The elastic member 122 may include a plurality of elastic members arranged at a predetermined interval in the length direction of the contact portion 121. The plurality of elastic members 122 may uniformly apply the elastic force downwards onto the contact portion 121.

The punch 120 may have a mounting groove 120c in which the elastic member 122 is mounted. The upper end of the elastic member 122 may be secured into the mounting grove 120c. The mounting groove 120c may include a plurality of mounting grooves arranged at the predetermined interval in the length direction of the punch 120 to mount the plurality of elastic members 122.

When the punch 120 presses down the pouch sheet 10, the force that the pouch sheet 10 applies upwards onto the contact portion 121 and the force that the elastic member 122 applies downwards onto the contact portion 121 may be properly balanced. Accordingly, the part of the pouch sheet 10 corresponding to the contact portion 121 may be formed into the lower edge adjacent to the bridge 13 among the lower edges of the cup portion 11 (see FIG. 1). Additionally, the feeding amount of the pouch sheet 10 for the bridge 13 may be sufficient. Accordingly, it may be possible to form the bridge 13 with a sufficiently small width and prevent the remaining thickness from becoming too small.

As shown in FIG. 6, when the contact portion 121 is in the basic state, the lower end of the contact portion 121 may be located (P1') lower than the lower surface 120a of the punch 120. The basic state may refer to a state before the punch 120 presses the pouch sheet 10. When the contact portion 121 is pressed upwards by the pouch sheet 10, the lower end of the contact portion 121 may be located on the same plane with the lower surface 120a of the punch 120.

Accordingly, the bottom surface of the cup portion 11 may be flat. Additionally, as the amount of deformation of the elastic member 122 increases, the elastic force that the elastic member 122 applies to the contact portion 121 may sufficiently increase. Accordingly, it may be possible to prevent the remaining thickness of the bridge 13 from becoming too small.

The foregoing description has been made to describe the technical aspect of the present disclosure by way of example, and persons having ordinary skill in the technical field pertaining to the present disclosure would have made a variety of modifications and changes without departing from the essential features of the present disclosure.

Therefore, the disclosed embodiments are provided to describe the technical aspect of the present disclosure and not intended to be limiting, and the technical scope of the present disclosure is not limited by these embodiments.

The scope of protection of the present disclosure should be interpreted by the appended claims, and it should be interpreted that all the technical spirit within the equivalent scope is included in the scope of protection of the present disclosure.

### [List of Reference Numerals]

| | | | |
|---|---|---|---|
| 10: | Pouch sheet, Pouch-type battery case | | |
| 11: | Cup portion | 13: | Bridge |
| 100: | Forming apparatus | 110: | Die |
| 111: | Forming space | 112: | Partition wall portion |
| 113: | Contact portion | 114: | Elastic member |
| 117: | Guide protrusion | 118: | Guide hole |
| 120: | Punch | 121: | Contact portion |
| 122: | Elastic member | 127: | Guide protrusion |
| 128: | Guide hole | | |

## Claims

1. A forming apparatus for forming a pouch sheet, the forming apparatus comprising:
a die having a pair of forming spaces recessed downwards from an upper surface, and a partition wall portion between the pair of forming spaces; and
a punch that is configured to inserted into the forming spaces and press the pouch sheet,
wherein at least one of the punch or the partition wall portion includes:
a contact portion that is extended in a direction and comes into contact with the pouch sheet; and
an elastic member configured to apply an elastic force to the contact portion in a direction toward the pouch sheet.

2. The forming apparatus according to claim 1,
wherein the contact portion is extended in parallel to the partition wall portion.

3. The forming apparatus according to claim 1,
wherein at least one of the punch or the partition wall portion has a mounting groove in which the elastic member is mounted.

4. The forming apparatus according to claim 1,
wherein the elastic member includes a plurality of elastic members arranged at a predetermined interval in a length direction of the contact portion.

5. A forming apparatus for forming a pouch sheet, the forming apparatus comprising:
a die having a pair of forming spaces recessed downwards from an upper surface, and a partition wall portion between the pair of forming spaces; and
a punch that is configured to inserted into the forming spaces and press the pouch sheet,
wherein the partition wall portion includes:
a contact portion that is extended in a direction and comes into contact with the pouch sheet; and
an elastic member configured to apply an elastic force to the contact portion in a direction toward the pouch sheet.

6. The forming apparatus according to claim 5,
wherein two upper edges of the contact portion are rounded.

7. The forming apparatus according to claim 5,
wherein the contact portion is located above the partition wall portion.

8. The forming apparatus according to claim 5,
wherein any one of the partition wall portion or the contact portion has a guide protrusion that is vertically extended, and the other one has a guide hole into which the guide protrusion is inserted.

9. The forming apparatus according to claim 5,
wherein when the contact portion is in a basic state, an upper end of the contact portion is located higher than the upper surface of the die, and
wherein when the contact portion is pressed downwards by the pouch sheet, the upper end of the contact portion is located lower than the upper surface of the die or on a same plane with the upper surface of the die.

10. A forming apparatus for forming a pouch sheet, the forming apparatus comprising:
a die having a forming space recessed downwards from an upper surface; and
a punch that is configured to inserted into the forming space and press the pouch sheet,
wherein the punch includes:
a contact portion defining a lower edge of the punch and extended in a direction; and
an elastic member configured to apply an elastic force downwards onto the contact portion.

11. The forming apparatus according to claim 10,
wherein when the contact portion is in a basic state, a lower end of the contact portion is located lower than a lower surface of the punch, and
wherein when the contact portion is pressed upwards by the pouch sheet, the lower end of the contact portion is located on a same plane with the lower surface of the punch.

12. The forming apparatus according to claim 10,
wherein a lower edge connecting a lower surface and an outer surface of the contact portion is rounded.

13. The forming apparatus according to claim 10,
wherein any one of the punch or the contact portion has a guide protrusion that is vertically extended, and the other one has a guide hole into which the guide protrusion is inserted.
